# EUROPÄISCHE PATENTSCHRIFT

(11) **EP 3 649 380 B1**
(45) Veröffentlichungstag und Bekanntmachung des Hinweises auf die Patenterteilung: **11.08.2021**
(21) Anmeldenummer: 18737831.0
(22) Anmeldetag: 26.06.2018
(51) Int. Cl.: F16H 61/16, F16H 59/54, F16H 61/682

(54) **BETRIEBSVERFAHREN FÜR EIN AUTOMATISCHES GETRIEBE EINES KRAFTFAHRZEUGS**
OPERATING METHOD FOR AN AUTOMATIC TRANSMISSION OF A MOTOR VEHICLE
PROCÉDÉ POUR FAIRE FONCTIONNER UNE BOÎTE DE VITESSES AUTOMATISÉE D'UN VÉHICULE À MOTEUR

(30) Priorität: 07.07.2017 DE 102017211656
(43) Veröffentlichungstag der Anmeldung: 13.05.2020
(73) Patentinhaber: Volkswagen Aktiengesellschaft, 38440 Wolfsburg (DE)
(72) Erfinder: HOFMANN, Rainer, 38350 Helmstedt (DE); SCHAMSCHA, Axel, 38542 Leiferde (DE)
(86) Internationale Anmeldenummer: PCT/EP2018/067133
(87) Internationale Veröffentlichungsnummer: WO 2019/007758

(56) Entgegenhaltungen:
- DE-A1-102007 004 042
- FR-A1- 2 841 834
- JP-A- 2007 239 809
- US-A1- 2006 190 143

## Beschreibung

Die Erfindung betrifft ein Betriebsverfahren für ein automatisches Getriebe, insbesondere ein automatisches Schaltgetriebe und/oder Doppelkupplungsgetriebe eines Kraftfahrzeugs mit den Merkmalen des Patentanspruchs 1.

Kraftfahrzeug-Getriebe, wie automatische Schaltgetriebe und/oder Doppelkupplungsgetriebe, weisen in der Regel mindestens einen oder mehrere jeweilige Gangsteller zum Einlegen mindestens eines bestimmten Gangs bzw. mehrerer jeweiliger bestimmter Gänge des Getriebes auf. Derartige Gangsteller können zum Beispiel in Form einer bewegbaren / verschiebbaren Schiebemuffe ausgestaltet und/oder ausgeführt sein. Hierbei ist dann ein Schaltrad des zu schaltenden Gangs bzw. der einzulegenden Gangstufe, welches zum Beispiel in Form eines Losrades ausgestaltet sein kann, drehwirksam mit einer Welle des Getriebes zu verbinden und davon zu lösen bzw. zu entkoppeln. Ein Gang bzw. eine Gangstufe weisen daher insbesondere zwei Zahnräder, insbesondere ein Festrad und ein Schaltrad (Losrad) auf, wobei im Bereich des Schaltrades insbesondere eine Synchronisierung und/oder ein Gangsteller vorgesehen ist.

Um die Drehzahl der jeweiligen Welle mit der Drehzahl des Schaltrades zu synchronisieren, kann eine Synchronisierung vorgesehen sein, welche ein Einlegen des bestimmten Gangs, insbesondere ein Einlegen des Gangstellers in das Schaltrad, bei unterschiedlichen Drehzahlen sperrt und bei gleichen Drehzahlen ermöglicht.

Bei einem normalen Schaltvorgang befindet sich der Gangsteller eines bestimmten Gangs, beispielsweise des dritten Gangs des Getriebes, in der Regel zunächst in einer Neutralstellung. Die Drehzahl des Schaltrades des bestimmten Gangs kann dabei unbestimmt sein. Dann wird der Gangsteller in eine Synchronposition gefahren. Solange die Drehzahl des Gangstellers und des Schaltrades unterschiedlich sind, sperrt die Synchronisierung den Gangsteller. Die Drehzahlen des Gangstellers und des Schaltrades werden dann synchronisiert, insbesondere wird die Drehzahl der zu synchronisierenden Welle auf die Synchrondrehzahl gebracht. Sobald sich die Drehzahlen des Gangstellers und des Schaltrades angeglichen haben, sperrt die Synchronisierung nicht mehr und der Gangsteller kann - beispielsweise nach einer kurzen Zeit in einer sogenannten Freiflugphase - in das Schaltrad eingreifen und das Schaltrad drehwirksam mit der Welle verbinden und somit den Gang einlegen.

Aus der EP 2 031 281 A2 ist ein Getriebesteuergerät für ein Motorrad bekannt, bei dem eine Steuereinheit ein automatisches Schalten unterbindet, wenn die Rotationsgeschwindigkeit des Hinterrades die Rotationsgeschwindigkeit des Vorderrades um mindestens einen bestimmten Wert übersteigt. Wenn ein Photodetektor ein Abheben des Vorderrades von der Fahrbahn erkennt, kann eine Antriebsübertragung auf das Hinterrad durch Öffnen einer Kupplung unterbrochen werden. Aus JP2007239809 ist auch bekannt eine Rückschaltung beim Aktivierten ABS zu unterbinden.

Aus der US 2006/0190143 A1 ist ein System zur Erkennung eines Abhebens von einem oder mehr Rädern eines Fahrzeugs von der Fahrbahn bekannt, in dem ein Sensor eine Radgeschwindigkeit mindestens eines Rades misst und eine Steuereinheit dessen Resonanzfrequenz und Resonanzfrequenzänderungen berechnet und ein Abheben eines Rades von der Fahrbahn erkennt, wenn die Resonanzfrequenzänderungen einen Grenzwert überschreiten.

Aus der DE 101 46 724 A1 ist ein Verfahren zur Erkennung eines Abhebens eines Rades eines Kraftfahrzeugs von der Fahrbahn bekannt, in dem eine Drehmomentsänderung auf das Rad ausgeübt wird, eine Änderung eines Radzustandes gemessen und ein Abheben eines Rades angezeigt wird, wenn die Änderung des Radzustandes größer als ein vorgegebener Grenzwert ist.

Aus der EP 0 943 513 A2 ist ein Steuergerät für ein Fahrzeug bekannt, welches ein laterales Moment des Fahrzeugkörpers während der Fortbewegung bestimmt, um das Verhalten des Fahrzeugkörpers basierend auf den Geschwindigkeiten von dessen Rädern und dem lateralen Moment abzuschätzen und eine von den jeweiligen Bremsaktuatoren anzuwendende Soll-Bremsstärke zu berechnen. Dabei kann auf der Basis der Radgeschwindigkeiten und des lateralen Moments ein Abheben eines der Räder von der Fahrbahn erkannt werden.

Die im Stand der Technik bekannten Verfahren sind jedoch noch nicht optimal ausgebildet. So kann - zum Beispiel bei einer Bremsung auf schlechter Fahrbahn und/oder bei einer Kurvenfahrt - eines oder mehrere angetriebene Fahrzeugräder des Fahrzeugs von der Fahrbahn abheben. Durch ein bei der Bremsung anliegendes Bremsmoment kann dabei ein von der Fahrbahn abgehobenes, angetriebenes Fahrzeugrad im abgehobenen Zustand bis hin zum vollständigen Stillstand, zum Beispiel bis auf 0 km/h, abgebremst werden und beim Wiederaufsetzten auf die Fahrbahn dann eine sehr starke Beschleunigung auf die Fahrzeuggeschwindigkeit erfahren. Dadurch wird die Drehzahl des mit dem abgehobenen, angetriebenen Fahrzeugrades, insbesondere über die Getriebeausgangswelle, triebwirksam verbundenen Gangstellers (beziehungsweise Schaltrades) zunächst bis auf Null reduziert und danach wieder stark angehoben, was zu sehr hohen Differenzdrehzahlen, beispielsweise bis zu etwa 1000 U/min, zwischen Gangsteller und Schaltrad beziehungsweise Getriebeausgangswelle und Getriebeeingangswelle führen kann. Trotz einer vormals erfolgreichen Synchronisierung kann dann somit der jeweilige Gangsteller nicht mehr im Gleichlauf mit dem Schaltrad sein. Insofern sich der Gangsteller hierbei gerade in der Freiflugphase befindet, versucht dieser aber dennoch in das Schaltrad einzugreifen, was aufgrund des, gegebenenfalls sehr hohen, Drehzahlunterschiedes zu einem "Kratzen" zwischen den Bauteilen und damit zu einem Bauteilverschleiß sowie einer Beeinträchtigung des Fahrkomforts durch störende Geräusche führen kann.

Der Erfindung liegt daher die Aufgabe zu Grunde, das eingangs genannte Betriebsverfahren für ein automatisches Getriebe, derart auszugestalten und weiterzubilden, dass das Getriebe kostengünstig, insbesondere mit einem reduzierten Bauteilverschleiß und/oder mit einer erhöhten Lebensdauer, betrieben und/oder der Fahrkomfort des Fahrzeugs verbessert werden kann.

Die der Erfindung zugrunde liegende Aufgabe wird durch ein Betriebsverfahren für ein automatisches Getriebe, insbesondere für ein automatisches Schaltgetriebe und/oder Doppelkupplungsgetriebe, für ein Kraftfahrzeug mit den Merkmalen des Patentanspruchs 1 gelöst.

In dem Verfahren wird, wenn während einer Bremsung ein Abheben mindestens eines angetriebenen Fahrzeugrades von der Fahrbahn erkannt wird, dann für die Dauer dieser Bremsung
- im Fall eines unabgeschlossenen Schaltvorgangs in einen, insbesondere neuen, Gang des Getriebes ein Einlegen des Gangs, insbesondere eines Gangstellers dieses Gangs, und/oder
- ein Starten eines Schaltvorgangs in einen, insbesondere neuen, Gang des Getriebes unterbunden und/oder verhindert.

Dadurch, dass für die Dauer der Bremsung im Fall eines unabgeschlossenen Schaltvorgangs ein Einlegen des Gangs, insbesondere des Gangstellers, unterbunden wird, kann ein Kratzen vermieden und damit der Bauteilverschleiß, beispielsweise des Gangstellers und/oder eines zugeordneten Schaltrades, reduziert und/oder die Lebensdauer erhöht und/oder der Fahrkomfort des Fahrzeugs durch eine Vermeidung von störenden Geräuschen verbessert werden.

Dadurch, dass für die Dauer der Bremsung ein Starten eines Schaltvorgangs, beispielsweise von allen Schaltvorgängen, unterbunden wird, kann eine nicht funktionierende Synchronisierung und ein Kratzen vermieden und damit der Bauteilverschleiß, beispielsweise der Synchronisierung und beispielsweise auch des Gangstellers und/oder eines zugeordneten Schaltrades, reduziert und/oder die Lebensdauer erhöht und/oder der Fahrkomfort des Fahrzeugs durch eine Vermeidung von störenden Geräuschen verbessert werden.

So kann das Getriebe kostengünstig, insbesondere mit einem reduzierten Bauteilverschleiß, betrieben und/oder der Fahrkomfort durch eine Vermeidung von störenden Geräuschen verbessert werden. Gegebenenfalls kann so das Getriebe selbst auch kostengünstiger produziert werden, da dessen Bauteile weniger robust und damit kostengünstiger ausgestaltet werden können.

Insbesondere kann, wenn während einer Bremsung ein Abheben mindestens eines angetriebenen Fahrzeugrades von der Fahrbahn erkannt wird, dann für die Dauer dieser Bremsung im Fall eines unabgeschlossenen Schaltvorgangs in einen, insbesondere neuen, Gang des Getriebes ein Einlegen eines Gangstellers des Gangs und/oder ein Starten von, insbesondere allen, Schaltvorgängen in Gänge des Getriebes unterbunden werden. Zum Beispiel kann, wenn während einer Bremsung ein Abheben mindestens eines angetriebenen Fahrzeugrades von der Fahrbahn erkannt wird, dann im Fall eines unabgeschlossenen Schaltvorgangs ein Einlegen eines, insbesondere neuen, Gangs des Getriebes in einem unaktiven Teilgetriebe eines Doppelkupplungsgetriebes, insbesondere eines Gangstellers des Gangs, und/oder ein Starten eines Schaltvorgangs in einen, insbesondere neuen, Gang des Getriebes in einem unaktiven Teilgetriebe eines Doppelkupplungsgetriebes, beispielsweise ein Starten einer Synchronisierung des, insbesondere neuen, Gangs unterbunden werden. Beispielsweise, kann wenn während einer Bremsung ein Abheben mindestens eines angetriebenen Fahrzeugrades von der Fahrbahn erkannt wird, eine Gangeinlege- und/oder Schaltvorgabe, welche in einem Normalzustand gemäß der Getriebestrategie angefordert würde, und/oder ein Gangeinlege- und/oder Schaltwunsch des Fahrzeugfahrers unterdrückt werden.

Im Fall eines unabgeschlossenen Schaltvorgangs in einen Gang des Getriebes kann beispielsweise bereits eine Synchronisierung laufen. Dass nun, wenn während einer Bremsung ein Abheben mindestens eines angetriebenen Fahrzeugrades von der Fahrbahn erkannt wird, ein Einlegen des Gangs, insbesondere des Gangstellers des Gangs, unterbunden wird, kann beispielsweise dazu führen, dass die Synchronisierung bis zur Beendung dieser Bremsung fortgeführt wird.

In einer Ausgestaltung wird jedoch, wenn während einer Bremsung ein Abheben mindestens eines angetriebenen Fahrzeugrades von der Fahrbahn erkannt wird, dann im Fall eines unabgeschlossenen Schaltvorgangs in einen Gang des Getriebes der Schaltvorgang, und damit beispielsweise auch eine laufende Synchronisierung dieses Schaltvorgangs, abgebrochen und der jeweilige Gangsteller wird in eine Neutralstellung geschaltet. So können die an der Synchronisierung beteiligten Bauteile geschont und Material und Energie eingespart werden.

In einer weiteren Ausgestaltung ist die Bremsung, insbesondere während der ein Abheben mindestens eines angetriebenen Fahrzeugrades von der Fahrbahn erkannt wird, eine Bremsung mittels eines aktiven Antiblockiersystems (ABS). Mithilfe eines aktiven Antiblockiersystems kann das Betriebsverfahren auf besonders einfache Weise durchgeführt werden.

In einer Ausgestaltung hiervon wird die Bremsung als beendet angesehen, wenn das Antiblockiersystem deaktiviert wird.

Für das Erkennen eines Abheben eines angetriebenen Fahrzeugrades können beispielsweise die Radgeschwindigkeiten der einzelnen Fahrzeugräder und/oder
Radgeschwindigkeitsgradienten der einzelnen Fahrzeugräder und/oder Differenzen zwischen Radgeschwindigkeiten der Fahrzeugräder verwendet werden.

In einer ersten Ausführungsform wird das Abheben eines angetriebenen Fahrzeugrades von der Fahrbahn erkannt, wenn während einer Bremsung, insbesondere mittels eines aktiven Antiblockiersystems, die Radgeschwindigkeit des angetriebenen Rades um einen bestimmten Geschwindigkeitsbetrag (x km/h) kleiner als eine Referenzgeschwindigkeit ist. Wenn ein Fahrzeugrad während einer Bremsung von der Fahrbahn abhebt, wird das abgehobene Fahrzeugrad - selbst bei einem auf ein Minimum reduzierten Bremsdruck - stärker durch die Bremsung abgebremst beziehungsweise verzögert als das Fahrzeug beziehungsweise als die mit der Fahrbahn in Kontakt stehenden Fahrzeugräder, auf welche durch das Rollen auf der Fahrbahn eine durch die Fahrbahn antreibende Kraft ausgeübt wird. Daher kann ein Abheben eines angetriebenen Fahrzeugrades dadurch erkannt werden, dass dessen Radgeschwindigkeit um einen bestimmten Geschwindigkeitsbetrag (x km/h) kleiner als eine, insbesondere auf einer, beispielsweise bewerteten, Fahrzeuggeschwindigkeit und/oder auf einem Radgeschwindigkeitsmittelwert basierende, Referenzgeschwindigkeit ist. Da eine aktive Antiblockiersystem-Regelung normalerweise große Differenzen zwischen den Radgeschwindigkeiten verhindert, kann auch diese Erkennungsmethode bei einer Bremsung mittels eines aktivem Antiblockiersystem besonders effizient sein.

In einer zweiten Ausführungsform wird das Abheben eines angetriebenen Fahrzeugrades von der Fahrbahn erkannt, wenn während einer Bremsung, insbesondere mittels eines aktiven Antiblockiersystems, der, insbesondere negative, Radgeschwindigkeitsgradient des angetriebenen Rades kleiner als ein bestimmter Grenzwert (y m/s²) ist. Wenn ein Fahrzeugrad während einer Bremsung von der Fahrbahn abhebt, unterliegt das abgehobene Fahrzeugrad bei der Bremsung einer größeren, verzögernden und damit negativen Beschleunigung als das Fahrzeug beziehungsweise als die mit der Fahrbahn in Kontakt stehenden Fahrzeugräder, auf welche durch das Rollen auf der Fahrbahn eine antreibende Kraft durch die Fahrbahn ausgeübt wird. Daher kann ein Abheben eines angetriebenen Fahrzeugrades dadurch erkannt werden, dass dessen, insbesondere negative, Radgeschwindigkeitsgradient kleiner, also negativer, als ein bestimmter Grenzwert (y m/s²) ist. Da eine aktive Antiblockiersystem-Regelung normalerweise große Differenzen zwischen den Radgeschwindigkeiten verhindert, kann auch diese Erkennungsmethode bei einer Bremsung mittels eines aktivem Antiblockiersystem besonders effizient sein.

In einer dritten Ausführungsform wird das Abheben eines angetriebenen Fahrzeugrades von der Fahrbahn erkannt, wenn während einer Bremsung, insbesondere mittels eines aktiven Antiblockiersystems, der, insbesondere negative, Radgeschwindigkeitsgradient des angetriebenen Rades um einen bestimmten Betrag (z m/s²) kleiner als der Gradient einer Referenzgeschwindigkeit ist. Wenn ein Fahrzeugrad während einer Bremsung von der Fahrbahn abhebt, unterliegt das abgehobene Fahrzeugrad bei der Bremsung einer größeren, verzögernden und damit negativen Beschleunigung als das Fahrzeug beziehungsweise als die mit der Fahrbahn in Kontakt stehenden Fahrzeugräder, auf welche durch das Rollen auf der Fahrbahn eine antreibende Kraft durch die Fahrbahn ausgeübt wird. Daher kann ein Abheben eines angetriebenen Fahrzeugrades dadurch erkannt werden, dass dessen, insbesondere negative, Radgeschwindigkeitsgradient um einen bestimmten Betrag (z m/s²) kleiner als der Gradient einer, insbesondere auf einer, beispielsweise bewerteten, Fahrzeuggeschwindigkeit und/oder einem Radgeschwindigkeitsmittelwert basierenden, Referenzgeschwindigkeit ist. Da eine aktive Antiblockiersystem-Regelung normalerweise große Differenzen zwischen den Radgeschwindigkeiten verhindert, kann auch diese Erkennungsmethode bei einer Bremsung mittels eines aktivem Antiblockiersystem besonders effizient sein.

In einer vierten Ausführungsform wird das Abheben eines angetriebenen Fahrzeugrades von der Fahrbahn durch eine Kombination der ersten und zweiten Ausführungsform erkannt.

In einer fünften Ausführungsform wird das Abheben eines angetriebenen Fahrzeugrades von der Fahrbahn durch eine Kombination der ersten und dritten Ausführungsform erkannt.

In einer sechsten Ausführungsform wird das Abheben eines angetriebenen Fahrzeugrades von der Fahrbahn erkannt, wenn während einer Bremsung, insbesondere mittels eines aktiven Antiblockiersystems, der, insbesondere positive, Radgeschwindigkeitsgradient des angetriebenen Rades größer als ein bestimmter Grenzwert (y' m/s²) ist. Wenn ein während einer Bremsung von der Fahrbahn abgehobenes, angetriebenes Fahrzeugrad im abgehobenen Zustand - gegebenenfalls bis hin zum vollständigen Stillstand - abgebremst wird und dann wieder auf der Fahrbahn aufsetzt, unterliegt das Fahrzeugrad beim Wiederaufsetzen einer größeren, positiven Beschleunigung als das Fahrzeug beziehungsweise als die mit der Fahrbahn in Kontakt stehenden Fahrzeugräder. Diese Beschleunigung kann im Fall eines Wiederaufsetzens nach einem vorherigen Abheben deutlich größer als in anderen Fahrsituationen erreichbare Beschleunigungen sein. Daher kann ein Abheben eines angetriebenen Fahrzeugrades, insbesondere nachträglich, dadurch erkannt werden, dass dessen, insbesondere positiver, Radgeschwindigkeitsgradient größer als ein bestimmter Grenzwert (y' m/s²) ist. Da eine aktive Antiblockiersystem-Regelung normalerweise große Differenzen zwischen den Radgeschwindigkeiten verhindert, kann auch diese Erkennungsmethode bei einer Bremsung mittels eines aktivem Antiblockiersystem besonders effizient sein.

In einer siebten Ausführungsform wird das Abheben eines angetriebenen Fahrzeugrades von der Fahrbahn erkannt, wenn während einer Bremsung, insbesondere mittels eines aktiven Antiblockiersystems, der, insbesondere positive, Radgeschwindigkeitsgradient des angetriebenen Rades um einen bestimmten Betrag (z' m/s²) größer als der Gradient einer Referenzgeschwindigkeit ist. Wenn ein während einer Bremsung von der Fahrbahn abgehobenes, angetriebenes Fahrzeugrad im abgehobenen Zustand - gegebenenfalls bis hin zum vollständigen Stillstand - abgebremst wird und dann wieder auf der Fahrbahn aufsetzt, unterliegt das Fahrzeugrad beim Wiederaufsetzen einer größeren, positiven Beschleunigung als das Fahrzeug beziehungsweise als die mit der Fahrbahn in Kontakt stehenden Fahrzeugräder. Diese Beschleunigung kann im Fall eines Wiederaufsetzens nach einem vorherigen Abheben deutlich größer als in anderen Fahrsituationen erreichbare Beschleunigungen sein. Daher kann ein Abheben eines angetriebenen Fahrzeugrades, insbesondere nachträglich, dadurch erkannt werden, dass dessen, insbesondere positiver, Radgeschwindigkeitsgradient um einen bestimmten Betrag (z' m/s²) größer als der Gradient einer Referenzgeschwindigkeit ist. Da eine aktive Antiblockiersystem-Regelung normalerweise große Differenzen zwischen den Radgeschwindigkeiten verhindert, kann auch diese Erkennungsmethode bei einer Bremsung mittels eines aktivem Antiblockiersystem besonders effizient sein.

In einer achten Ausführungsform wird das Abheben eines angetriebenen Fahrzeugrades von der Fahrbahn durch eine Kombination der ersten und sechsten Ausführungsform erkannt.

In einer neunten Ausführungsform wird das Abheben eines angetriebenen Fahrzeugrades von der Fahrbahn durch eine Kombination der ersten und siebten Ausführungsform erkannt.

In einer weiteren Ausgestaltung wird als Referenzgeschwindigkeit:
- der Mittelwert der Radgeschwindigkeiten aller Fahrzeugräder, oder
- der Mittelwert der Radgeschwindigkeiten der Fahrzeugräder einer nicht-angetriebenen Achse des Fahrzeugs, oder
- eine bewertete Fahrzeuggeschwindigkeit, welche dadurch ermittelt wird, dass die Plausibilität der Radgeschwindigkeiten ermittelt wird und lediglich aus den plausiblen Radgeschwindigkeiten die Fahrzeuggeschwindigkeit ermittelt wird,
verwendet. Bei der bewerteten Fahrzeuggeschwindigkeit können beispielsweise Radgeschwindigkeiten, die stärker beschleunigen oder verzögern als plausibel als nicht plausibel bewertet und dann daher nicht zur Bildung der bewerteten Fahrzeuggeschwindigkeit verwendet werden.

Bei einer Bremsung mittels eines aktiven Antiblockiersystems können Signale, wie die Radgeschwindigkeit/en und/oder Radgeschwindigkeitsgradient/en, beispielsweise erst nach einer bestimmten Totzeit ausgewertet werden. Während der bestimmten Totzeit kann das Antiblockiersystem beispielsweise erst einmal den Bremsdruck einregeln und/oder Regelsysteme einschwingen lassen. Als bestimmte Totzeit für den Beginn der Auswertung hat sich zum Beispiel eine Zeitspanne von etwa 100 ms ab Aktivierung der Antiblockiersystem-Bremsung bewährt.

Das Betriebsverfahren kann insbesondere für ein automatisches Getriebe, beispielsweise für ein automatisches Schaltgetriebe und/oder ein Doppelkupplungsgetriebe, für ein Kraftfahrzeug mit mindestens drei Rädern, insbesondere mit mindestens vier Rädern, ausgelegt sein.

Beispielsweise kann das Betriebsverfahren für ein automatisches Getriebe, beispielsweise für ein automatisches Schaltgetriebe und/oder Doppelkupplungsgetriebe, für ein Kraftfahrzeug mit vier Rädern und einem Frontantrieb ausgelegt sein. Dann kann das Verfahren insbesondere durchgeführt werden, wenn ein Abheben mindestens eines angetriebenen Fahrzeugrades der Vorderachse beziehungsweise wenn ein Abheben mindestens eines angetriebenen Vorderrades erkannt wird.

Das Betriebsverfahren kann jedoch beispielsweise auch für ein automatisches Getriebe, beispielsweise für ein automatisches Schaltgetriebe und/oder Doppelkupplungsgetriebe, für ein Kraftfahrzeug mit vier Rädern und einem Heckantrieb ausgelegt sein. Dann kann das Verfahren insbesondere durchgeführt werden, wenn ein Abheben mindestens eines angetriebenen Fahrzeugrades der Hinterachse beziehungsweise wenn ein Abheben mindestens eines angetriebenen Hinterrades erkannt wird.

Das Betriebsverfahren kann jedoch beispielsweise auch für ein automatisches Getriebe, beispielsweise für ein automatisches Schaltgetriebe und/oder Doppelkupplungsgetriebe, für ein Kraftfahrzeug mit vier Rädern und einem Allradantrieb ausgelegt sein. Dann kann das Verfahren insbesondere durchgeführt werden, wenn ein Abheben mindestens eines angetriebenen Fahrzeugrades der Vorderachse beziehungsweise wenn ein Abheben mindestens eines angetriebenen Vorderrades und/oder wenn ein Abheben mindestens eines angetriebenen Fahrzeugrades der Hinterachse beziehungsweise wenn ein Abheben mindestens eines angetriebenen Hinterrades erkannt wird.

Die eingangs genannten Nachteile sind daher vermieden und entsprechende Vorteile sind erzielt.

Es gibt nun eine Vielzahl von Möglichkeiten, das erfindungsgemäße Betriebsverfahren in vorteilhafter Art und Weise auszugestalten und weiterzubilden. Hierfür darf zunächst auf die dem Patentanspruch 1 nachgeordneten Patentansprüche verwiesen werden. Im Folgenden werden einige bevorzugte Ausgestaltung des erfindungsgemäßen Betriebsverfahrens anhand der Zeichnung und der dazugehörigen Beschreibung näher erläutert. In der Zeichnung zeigt:
- Fig. 1: in schematischen Graphen eine Bremsung mittels eines aktiven Antiblockiersystems ohne Abheben von Fahrzeugrädern,
- Fig. 2: in schematischen Graphen eine Bremsung mittels eines aktiven Antiblockiersystems mit Abheben von Fahrzeugrädern,
- Fig. 3: schematische Graphen zur Veranschaulichung eines Schaltvorgangs während einer Bremsung mit einem abgehobenen, angetriebenen Fahrzeugrad gemäß einer herkömmlichen Getriebestrategie für ein automatisches Getriebe,
- Fig. 4: schematische Graphen zur Veranschaulichung eines Schaltvorgangs während einer Bremsung mit einem abgehobenen, angetriebenen Fahrzeugrad mit einer Ausführungsform eines erfindungsgemäßen Betriebsverfahrens für ein automatisches Getriebe, in der im Fall eines unabgeschlossenen Schaltvorgangs für die Dauer dieser Bremsung ein Einlegen des Gangs unterbunden wird, und
- Fig. 5: schematische Graphen zur Veranschaulichung eines Schaltvorgangs bei einem abgehobenen, angetriebenen Fahrzeugrad mit einer weiteren Ausführungsform eines erfindungsgemäßen Betriebsverfahrens für ein automatisches Getriebe, in der für die Dauer dieser Bremsung ein Starten eines Schaltvorgangs unterbunden wird.

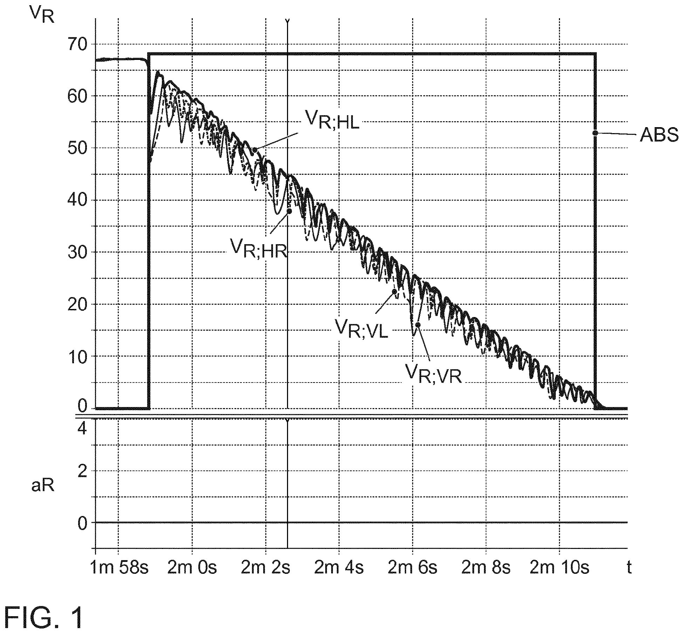

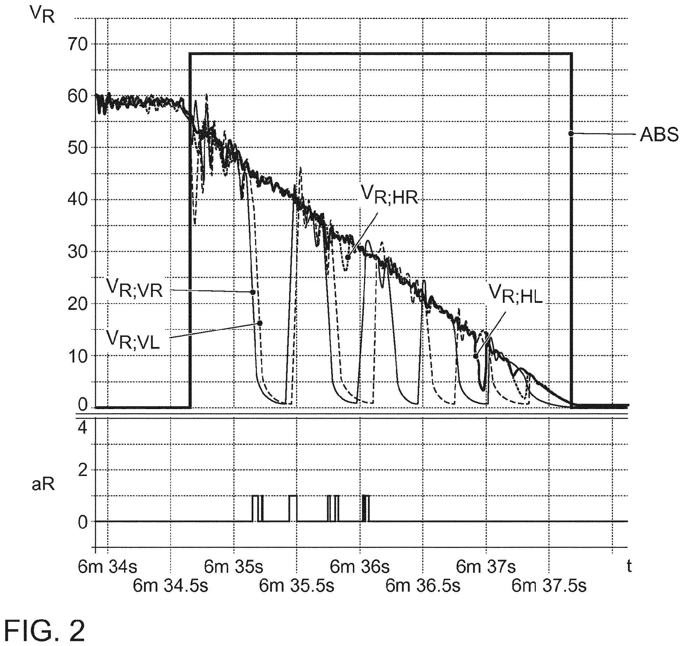

Fig. 1 und 2 zeigen jeweils im oberen Fenster schematische Graphen zur Veranschaulichung von Radgeschwindigkeitsgradienten während einer Bremsung mittels eines aktiven Antiblockiersystems ABS, in denen die Radgeschwindigkeiten v_{R},v_{R,VL},v_{R,VR},v_{R,HL},v_{R,HR} des linken und rechten Vorderrades v_{R,VL},v_{R,VR} sowie des linken und rechten Hinterrades v_{R,HL},v_{R,HR} eines Kraftfahrzeugs gegen die Zeit t aufgetragen sind.

Im unteren Fenster weisen Fig. 1 und 2 jeweils Graphen auf, in denen ein abgehobener Status eines angetriebenen Fahrzeugrades aR gegen die Zeit t aufgetragen ist.

Fig. 1 zeigt dabei eine ABS-Bremsung ohne Abheben von Fahrzeugrädern.

Fig. 2 zeigt dabei eine ABS-Bremsung bei der das linke und rechte angetriebene Vorderrad des Fahrzeugs von der Fahrbahn abhebt und veranschaulicht, dass im Fall eines Abhebens eines angetriebenen Fahrzeugrades aR,
- dessen Radgeschwindigkeit v_{R,VL},v_{R,VR} um einen bestimmten Geschwindigkeitsbetrag kleiner als eine, beispielsweise auf den Radgeschwindigkeiten der nicht-abgehobenen und/oder nicht-angetriebenen Hinterräder v_{R,HL},v_{R,HR} basierende, Referenzgeschwindigkeit ist, und
- dessen negativer Radgeschwindigkeitsgradient v_{R,VL},v_{R,VR} kleiner als ein bestimmter Grenzwert und um einen bestimmten Betrag kleiner als der Gradient einer, beispielsweise auf den Radgeschwindigkeiten der nicht-abgehobenen und/oder nicht-angetriebenen Hinterräder v_{R,HL},v_{R,HR} basierenden, Referenzgeschwindigkeit, und
- dessen positive Radgeschwindigkeitsgradient v_{R,VL},v_{R,VR} größer als ein bestimmter Grenzwert ist und um einen bestimmten Betrag größer als der Gradient einer, beispielsweise auf den Radgeschwindigkeiten der nicht-abgehobenen und/oder nicht-angetriebenen Hinterräder v_{R,HL},v_{R,HR} basierenden, Referenzgeschwindigkeit ist,
und dass somit durch ein Erfüllen mindestens insbesondere nur eines dieser zuvor genannten Kriterien ein Abheben eines Fahrzeugrades von der Fahrbahn erkannt werden kann.

Zum Beispiel kann durch eine Kombination von:
- einer Radgeschwindigkeit v_{R,VL},v_{R,VR}, welche um einen bestimmten Geschwindigkeitsbetrag kleiner als die Referenzgeschwindigkeit ist, und
- einem negativen Radgeschwindigkeitsgradienten v_{R,VL},v_{R,VR}, welcher um einen bestimmten Betrag kleiner als der Gradient der Referenzgeschwindigkeit ist, oder durch eine Kombination von:

- einer Radgeschwindigkeit v_{R,VL},v_{R,VR}, welche um einen bestimmten Geschwindigkeitsbetrag kleiner als die Referenzgeschwindigkeit ist, und
- einem positive Radgeschwindigkeitsgradient v_{R,VL},v_{R,VR}, welcher um einen bestimmten Betrag größer als der Gradient der Referenzgeschwindigkeit ist,
ein Abheben eines angetriebenen Fahrzeugrades aR erkannt werden.

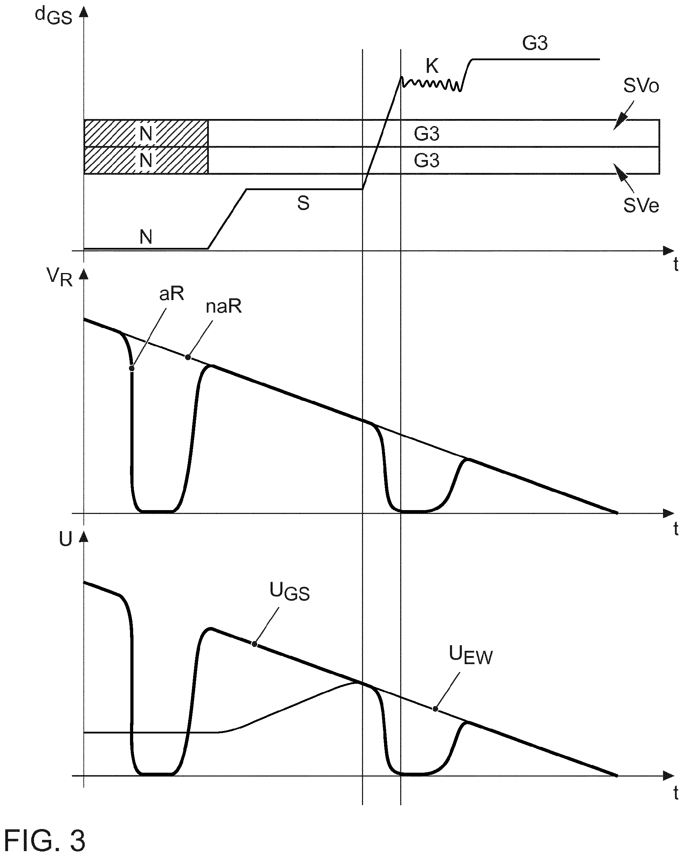

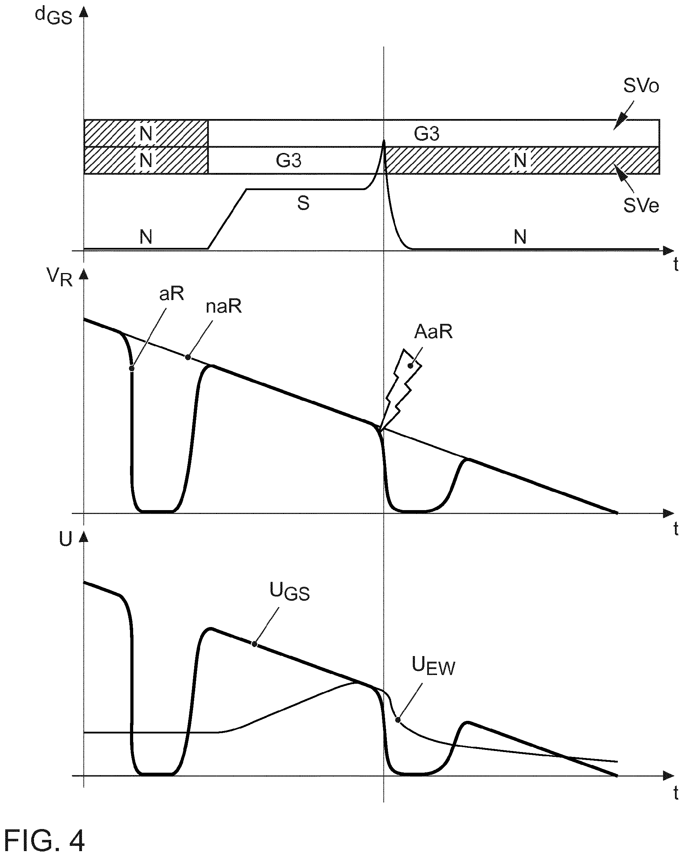

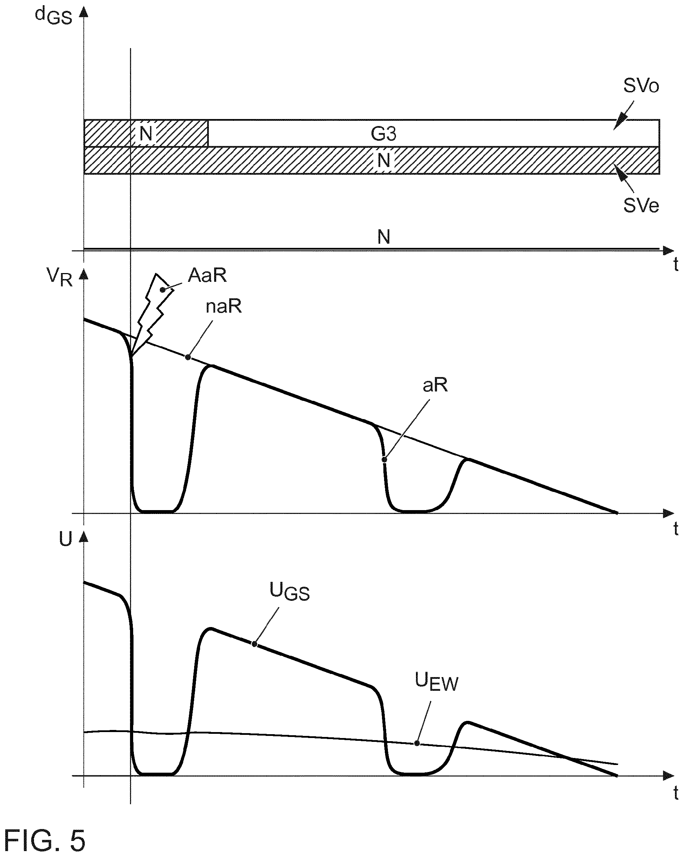

Die Fig. 3, 4 und 5 zeigen jeweils im oberen Fenster schematische Graphen, in denen der Weg d_{GS} eines Gangstellers, beispielsweise in Form einer Schiebemuffe, eines Gangs eines automatischen Getriebes, eine Schaltvorgabe SVo für den Gangsteller, welche in einem Normalzustand gemäß einer herkömmlichen Getriebestrategie angefordert würde, und ein Schaltverhalten SVe des Gangsteller gemäß einer herkömmlichen Getriebestrategie (siehe Fig. 3) beziehungsweise gemäß eines erfindungsgemäßen Betriebsverfahrens (siehe Fig. 4 und 5) gegen die Zeit t aufgetragen sind.

Die Fig. 3, 4 und 5 zeigen jeweils im mittleren Fenster schematische Graphen, in denen Radgeschwindigkeiten von angetriebenen Fahrzeugrädern aR und nicht-angetriebenen Fahrzeugrädern naR gegen die Zeit t aufgetragen sind.

Die Fig. 3, 4 und 5 zeigen jeweils im unteren Fenster schematische Graphen, in denen die Drehzahl U_{GS} eines mit den angetriebenen Fahrzeugrädern aR triebwirksam verbundenen Gangstellers beziehungsweise einer mit den angetriebenen Fahrzeugrädern aR triebwirksam verbundenen Getriebeausgangswelle des Getriebes und die Drehzahl U_{EW} eines Schaltrades, beispielsweise in Form eines Losrades, des Gangs beziehungsweise einer Getriebeeingangswelle des Getriebes gegen die Zeit t aufgetragen sind.

Fig. 3 veranschaulicht einen Schaltvorgang gemäß einer herkömmlichen Getriebestrategie für ein automatisches Getriebe während einer Bremsung, beispielsweise mittels eines aktiven Antiblockiersystems, mit einem abgehobenen, angetriebenen Fahrzeugrad aR.

Das obere Fenster von Fig. 3 zeigt, dass gemäß einer Schaltvorgabe SVo der Gangsteller von einer Neutralstellung N in einen Gang G3, beispielsweise in den dritten Gang, des Getriebes geschaltet werden soll. Wie das Schaltverhalten SVe zeigt, wird der Gangsteller auch gemäß der Schaltvorgabe SVo von der Neutralstellung N in den, beispielsweise dritten, Gang G3 geschaltet. Dabei wird der Gangsteller zunächst von einer Position für die Neutralstellung N in ein Position für eine Synchronisierung S gefahren. Nach Abschluss der Synchronisierung S soll der Gangsteller dann in den, beispielsweise dritten, Gang G3, eingelegt werden, wobei der Gangsteller beispielsweise in ein Schaltrad des Gangs G3 eingreift. Bevor dies geschieht tritt jedoch ein Kratzen K zwischen dem Gangsteller und dem Schaltrad, beispielsweise beim Aufschieben eines Gangstellers in Form einer Schiebemuffe auf eine (Kurz-)Verzahnung des Schaltrades, auf.

Das mittlere und untere Fenster von Fig. 3 illustrieren, dass das Kratzen K durch eine unsynchrone Schaltung des Gangstellers verursacht wurde. Diese wurde wiederum dadurch verursacht, dass nach der Synchronisierung S ein angetriebenes Fahrzeugrades aR, welches triebwirksam, beispielsweise über einen Synchronkörper und zum Beispiel auch über eine Getriebeausgangswelle und/oder ein Differential, mit dem Gangsteller verbunden ist, von der Fahrbahn abgehoben ist und durch die Bremsung bis zum Stillstand abgebremst wurde. Dadurch hat sich dessen Radgeschwindigkeit v_{R} und durch die triebwirksame Verbindung mit dem Gangsteller auch die Drehzahl des Gangstellers U_{GS} bis auf 0 km/h beziehungsweise U/min verringert, wodurch die Drehzahl des Gangsteller U_{GS} - trotzt der zuvor erfolgreich durchgeführten Synchronisierung - unsynchron mit der Drehzahl U_{EW} des Schaltrades beziehungsweise der Getriebeeingangswelle geworden ist.

Fig. 4 veranschaulicht einen Schaltvorgang gemäß einer Ausführungsform des erfindungsgemäßen Betriebsverfahrens für ein automatisches Getriebe während einer Bremsung, beispielsweise mittels eines aktiven Antiblockiersystems, mit einem abgehobenen, angetriebenen Fahrzeugrad aR.

Fig. 4 zeigt, dass dabei wenn das Abheben des angetriebenen Fahrzeugrades aR von der Fahrbahn, beispielsweise anhand der Verringerung der Radgeschwindigkeit v_{R} des angetriebenen Fahrzeugrades aR, bei einem unabgeschlossenen Schaltvorgang, beispielsweise nach der Synchronisierung, erkannt A_{aR} wird, das Einlegen des Gangs G3 für die Dauer dieser Bremsung unterbunden beziehungsweise abgebrochen wird. Dabei wird insbesondere der unabgeschlossenen Schaltvorgang abgebrochen und der Gangsteller für die Dauer dieser Bremsung in die Position für die Neutralstellung N des Getriebes geschaltet. Zudem kann dabei insbesondere auch ein Starten von, beispielsweise weiteren, Schaltvorgängen für die Dauer dieser Bremsung unterbunden werden. So kann eine unsynchrone Schaltung und damit ein Kratzen zwischen dem Gangsteller und dem Schaltrad vermieden werden.

Fig. 5 veranschaulicht einen Schaltvorgang gemäß einer weiteren Ausführungsform des erfindungsgemäßen Betriebsverfahrens für ein automatisches Getriebe während einer Bremsung, beispielsweise mittels eines aktiven Antiblockiersystems, mit einem abgehobenen, angetriebenen Fahrzeugrad aR.

Fig. 5 zeigt, dass dabei wenn das Abheben des angetriebenen Fahrzeugrades aR von der Fahrbahn, beispielsweise anhand der Verringerung der Radgeschwindigkeit v_{R} des angetriebenen Fahrzeugrades aR, erkannt A_{aR} wird, insbesondere bevor ein Schaltvorgang, beispielsweise ein Synchronisierungsvorgang und/oder Gangeinlegevorgang, gestartet wurde, für die Dauer dieser Bremsung ein Starten von Schaltvorgängen unterbunden wird. Dabei wird der Gangsteller für die Dauer dieser Bremsung in der Position für die Neutralstellung N gehalten. So kann ebenfalls eine unsynchrone Schaltung und damit ein Kratzen zwischen dem Gangsteller und dem Schaltrad vermieden werden.

### Bezugszeichenliste

- aR: abgehobenes, angetriebenes Fahrzeugrad
- naR: nicht-abgehobenes, angetriebenes Farzeugrad

- ABS: Antiblockiersystem
- t: Zeit

- v_{R}: Radgeschwindigkeit
- v_{R,VL}: Radgeschwindigkeit des linken Vorderrades
- v_{R,VR}: Radgeschwindigkeit des rechten Vorderrades
- v_{R,HL}: Radgeschwindigkeit des linken Hinterrades
- v_{R,HR}: Radgeschwindigkeit des rechten Hinterrades

- d_{GS}: Weg des Gangstellers
- SVo: Schaltvorgabe
- SVe: Schaltverhalten

- N: Neutralstellung
- S: Synchronisierung
- K: Kratzen des Gangstellers
- G3: Gang, beispielsweise dritter Gang

- U: Drehzahl
- U_{EW}: Getriebeeingangswellen-Drehzahl
- U_{GS}: Gangsteller- beziehungsweise Getriebeausgangswellen-Drehzahl

- A_{aR}: Erkennung eines abgehobenen, angetriebenen Fahrzeugrades

## Patentansprüche

1. Betriebsverfahren für ein automatisches Getriebe, insbesondere für ein automatisches Schaltgetriebe und/oder Doppelkupplungsgetriebe, für ein Kraftfahrzeug, **dadurch gekennzeichnet, dass**,
wenn während einer Bremsung ein Abheben mindestens eines angetriebenen Fahrzeugrades (aR) von der Fahrbahn erkannt wird,
dann wird für die Dauer dieser Bremsung
- im Fall eines unabgeschlossenen Schaltvorgangs in einen Gang (G3) des Getriebes ein Einlegen des Gangs (G3) unterbunden und/oder
- ein Starten eines Schaltvorgangs in einen Gang (G3) des Getriebes unterbunden.

2. Betriebsverfahren nach Anspruch 1, **dadurch gekennzeichnet, dass** im Fall eines unabgeschlossenen Schaltvorgangs in einen Gang (G3) des Getriebes der Schaltvorgang abgebrochen und/oder der jeweilige Gangsteller in eine Neutralstellung (N) geschaltet wird.

3. Betriebsverfahren nach Anspruch 1 oder 2, **dadurch gekennzeichnet, dass** die Bremsung eine Bremsung mittels eines aktiven Antiblockiersystems (ABS) ist.

4. Betriebsverfahren nach Anspruch 3, **dadurch gekennzeichnet, dass** die Bremsung als beendet angesehen wird, wenn das Antiblockiersystem (ABS) deaktiviert wird.

5. Betriebsverfahren nach einem der vorstehenden Ansprüche, **dadurch gekennzeichnet, dass** das Abheben eines angetriebenen Fahrzeugrades (aR) von der Fahrbahn erkannt wird, wenn während einer Bremsung, insbesondere mittels eines aktiven Antiblockiersystems (ABS), die Radgeschwindigkeit (v_{R}) des angetriebenen Rades (aR) um einen bestimmten Geschwindigkeitsbetrag kleiner als eine Referenzgeschwindigkeit ist.

6. Betriebsverfahren nach einem der vorstehenden Ansprüche, **dadurch gekennzeichnet, dass** das Abheben eines angetriebenen Fahrzeugrades (aR) von der Fahrbahn erkannt wird, wenn während einer Bremsung, insbesondere mittels eines aktiven Antiblockiersystems (ABS), der negative Radgeschwindigkeitsgradient des angetriebenen Rades (aR) kleiner als ein bestimmter Grenzwert ist.

7. Betriebsverfahren nach einem der vorstehenden Ansprüche, **dadurch gekennzeichnet, dass** das Abheben eines angetriebenen Fahrzeugrades (aR) von der Fahrbahn erkannt wird, wenn während einer Bremsung, insbesondere mittels eines aktiven Antiblockiersystems (ABS), der negative Radgeschwindigkeitsgradient des angetriebenen Rades (aR) um einen bestimmten Betrag kleiner als der Gradient einer Referenzgeschwindigkeit ist.

8. Betriebsverfahren nach einem der vorstehenden Ansprüche, **dadurch gekennzeichnet, dass** das Abheben eines angetriebenen Fahrzeugrades (aR) von der Fahrbahn erkannt wird, wenn während einer Bremsung, insbesondere mittels eines aktiven Antiblockiersystems (ABS), der positive Radgeschwindigkeitsgradient des angetriebenen Rades (aR) größer als ein bestimmter Grenzwert ist.

9. Betriebsverfahren nach einem der vorstehenden Ansprüche, **dadurch gekennzeichnet, dass** das Abheben eines angetriebenen Fahrzeugrades (aR) von der Fahrbahn erkannt wird, wenn während einer Bremsung, insbesondere mittels eines aktiven Antiblockiersystems (ABS), der positive Radgeschwindigkeitsgradient des angetriebenen Rades (aR) um einen bestimmten Betrag größer als der Gradient einer Referenzgeschwindigkeit ist.

10. Betriebsverfahren nach einem der vorstehenden Ansprüche, **dadurch gekennzeichnet, dass** als Referenzgeschwindigkeit:
- der Mittelwert der Radgeschwindigkeiten (v_{R}, v_{R,VL}, v_{R,VR}, v_{R,HL}, v_{R,HR}) aller Fahrzeugräder oder
- der Mittelwert der Radgeschwindigkeiten der Fahrzeugräder einer nicht-angetriebenen Achse des Fahrzeugs oder
- eine bewertete Fahrzeuggeschwindigkeit, welche dadurch ermittelt wird, dass die Plausibilität der Radgeschwindigkeiten ermittelt wird und lediglich aus den plausiblen Radgeschwindigkeiten die Fahrzeuggeschwindigkeit ermittelt wird,
verwendet wird.

## Claims

1. Operating method for an automatic transmission, in particular for an automatic manual transmission and/or dual-clutch transmission for a motor vehicle, **characterized in that**
if a lifting of at least one driven vehicle wheel (aR) from the roadway is detected during braking,
then, for the duration of this braking,
- in the event of incomplete shifting into a gear (G3) of the transmission, engagement of the gear (G3) will be prevented and/or
- a shifting process into a gear (G3) of the transmission will be prevented from starting.

2. Operating method according to Claim 1, **characterized in that,** in the event of incomplete shifting into a gear (G3) of the transmission, the shifting process will be aborted, and/or the respective gear shifter will be shifted into a neutral position (N).

3. Operating method according to Claims 1 or 2, **characterized in that** the braking is a braking by means of an active anti-lock braking system (ABS).

4. Operating method according to Claim 3, **characterized in that** the braking is considered to be completed when the anti-lock braking system (ABS) is deactivated.

5. Operating method according to any one of the preceding claims, **characterized in that** the lifting of a driven vehicle wheel (aR) from the roadway is detected when, during braking, in particular by means of an active anti-lock braking system (ABS), the wheel speed (v_{R}) of the driven wheel (aR) is less than a reference speed by a specific speed amount.

6. Operating method according to any one of the preceding claims, **characterized in that** the lifting of a driven vehicle wheel (aR) from the roadway is detected when, during braking, in particular by means of an active anti-lock braking system (ABS), the negative wheel speed gradient of the driven wheel (aR) is less than a certain limit value.

7. Operating method according to any one of the preceding claims, **characterized in that** the lifting of a driven vehicle wheel (aR) from the roadway is detected when, during braking, in particular by means of an active anti-lock braking system (ABS), the negative wheel speed gradient of the driven wheel (aR) is less than the gradient of a reference speed by a certain amount.

8. Operating method according to any one of the preceding claims, **characterized in that** the lifting of a driven vehicle wheel (aR) from the roadway is detected when, during braking, in particular by means of an active anti-lock braking system (ABS), the positive wheel speed gradient of the driven wheel (aR) is greater than a specific limit value.

9. Operating method according to any one of the preceding claims, **characterized in that** the lifting of a driven vehicle wheel (aR) from the roadway is detected when, during braking, in particular by means of an active anti-lock braking system (ABS), the positive wheel speed gradient of the driven wheel (aR) is greater than the gradient of a reference speed by a certain amount.

10. Operating method according to any one of the preceding claims, **characterized in that:**
- the average of the wheel speeds (v_{R}, v_{R,VL}, v_{R,VR}, v_{R,HL}, v_{R,HR}) of all vehicle wheels or
- the average of the wheel speeds of the vehicle wheels of a non-driven axle of the vehicle, or
- an evaluated vehicle speed which is determined by determining the plausibility of the wheel speeds and determining the vehicle speed solely from the plausible wheel speeds,
is used as the reference speed.

## Revendications

1. Procédé de fonctionnement pour une boîte de vitesses automatisée, en particulier pour une boîte de vitesses manuelle automatisée et/ou une boîte de vitesses à double embrayage, pour un véhicule à moteur, **caractérisé en ce que,**
lorsque, pendant le freinage, un soulèvement d'au moins une roue de véhicule (aR) entraînée de la chaussée est détecté,
alors, pendant la durée de ce freinage
- dans le cas où un processus de changement de vitesse dans un rapport (G3) de la boîte de vitesses ne serait pas terminé, un engagement du rapport (G3) est empêché et/ou
- un démarrage d'un processus de changement de vitesse dans un rapport (G3) de la boîte de vitesses est empêché.

2. Procédé de fonctionnement selon la revendication 1, **caractérisé en ce que,** dans le cas où un processus de changement de vitesse dans un rapport (G3) de la boîte de vitesse ne serait pas terminé, le processus de changement de vitesse est interrompu et/ou le sélecteur de vitesse respectif est commuté dans une position neutre (N).

3. Procédé de fonctionnement selon la revendication 1 ou 2, **caractérisé en ce que** le freinage est un freinage au moyen d'un système antiblocage (ABS) actif.

4. Procédé de fonctionnement selon la revendication 3, **caractérisé en ce que** le freinage est considéré comme terminé, lorsque le système antiblocage (ABS) est désactivé.

5. Procédé de fonctionnement selon l'une quelconque des revendications précédentes, **caractérisé en ce que** le soulèvement d'une roue de véhicule (aR) entraînée de la chaussée est détecté, lorsque, pendant un freinage, en particulier au moyen d'un système antiblocage (ABS) actif, la vitesse de roue (v_{R}) de la roue entraînée (aR) est inférieure d'une quantité de vitesse définie à une vitesse de référence.

6. Procédé de fonctionnement selon l'une quelconque des revendications précédentes, **caractérisé en ce que** le soulèvement d'une roue de véhicule (aR) entraînée de la chaussée est détecté, lorsque, pendant un freinage, en particulier au moyen d'un système antiblocage (ABS) actif, le gradient de vitesse de roue négatif de la roue entraînée (aR) est inférieur à une valeur limite définie.

7. Procédé de fonctionnement selon l'une quelconque des revendications précédentes, **caractérisé en ce que** le soulèvement d'une roue de véhicule (aR) entraînée de la chaussée est détecté, lorsque, pendant un freinage, en particulier au moyen d'un système antiblocage (ABS) actif, le gradient de vitesse de roue négatif de la roue entraînée (aR) est inférieur d'une quantité définie au gradient d'une vitesse de référence.

8. Procédé de fonctionnement selon l'une quelconque des revendications précédentes, **caractérisé en ce que** le soulèvement d'une roue de véhicule (aR) entraînée de la chaussée est détecté, lorsque, pendant un freinage, en particulier au moyen d'un système antiblocage (ABS) actif, le gradient de vitesse de roue positif de la roue entraînée (aR) est supérieur à une valeur limite définie.

9. Procédé de fonctionnement selon l'une quelconque des revendications précédentes, **caractérisé en ce que** le soulèvement d'une roue de véhicule (aR) entraînée de la chaussée est détecté, lorsque, pendant un freinage, en particulier au moyen d'un système antiblocage (ABS) actif, le gradient de vitesse de roue positif de la roue entraînée (aR) est supérieur d'une quantité définie au gradient d'une vitesse de référence.

10. Procédé selon l'une quelconque des revendications précédentes, **caractérisé en ce que,** en guise de vitesse de référence :
- la valeur moyenne des vitesses de roue (v_{R}, v_{R,VL}, v_{R,VR}, v_{R,HL}, v_{R,HR}) de toutes les roues de véhicule ou
- la valeur moyenne des vitesses de roue des roues de véhicule d'un essieu non entraîné du véhicule ou
- une vitesse de véhicule évaluée, qui est déterminée **en ce que** la plausibilité des vitesses de roue est déterminée et la vitesse de véhicule est déterminée uniquement à partir des vitesses de roue plausibles,
est utilisée.
